# EUROPEAN PATENT APPLICATION

(11) **EP 1 170 506 A1**
(43) Date of publication of application: **09.01.2002**
(21) Application number: 00915472.5
(22) Date of filing: 10.04.2000
(51) Int. Cl.: F04B 39/00, F04B 39/02, C09K 5/04, C10M 169/04

(54) **HERMETIC COMPRESSOR**

(30) Priority: 15.04.1999 JP 10793399
(71) Applicant: Matsushita Refrigeration Company, Higashi, Osaka-shi, Osaka 577-0066 (JP)
(72) Inventor: AWASHIMA, Hiroki, Fujisawa-shi, Kanagawa 251-0035 (JP); MIYOSHI, Takeo, Chigasaki-shi Kanagawa 253-0014 (JP); YAMAGUCHI, Masahiro, Fujisawa-shi, Kanagawa 251-0021 (JP); TAKAHASHI, Terunobu, Ashigarashimo-gun, Kanagawa 259-0311 (JP)
(74) Representative: Schirdewahn, Jürgen
(86) International application number: JP0002336
(87) International publication number: WO0063559

(57) **Abstract**

In a hermetic compressor using a hydrocarbon refrigerant and mineral lubrication oil, if the viscosity of the mineral lubrication oil is lowered for higher efficiency, lubrication performance is degraded, and reliability lowers. Therefore, additives are added to the refrigerating machine oil to improve lubrication performance and to meet the needs for higher efficiency, lower noise and higher reliability.

## Description

### FIELD OF TECHNOLOGY

The present invention relates to a hermetic compressor for use with refrigerators, air conditioners, dehumidifiers and the like.

### BACKGROUND OF THE INVENTION

In recent years, global environmental protection movements have become active; and in contrast to the conventional refrigerants, hydrocarbon-based refrigerants having zero ozone depletion potential (O.D.P.) and zero global warming potential (G.W.P.) have begun to be used. In addition, the demands for saving energy and reducing noise of electric refrigerators have become more severe in recent years; and therefore, these demands are also increasing for compressors.

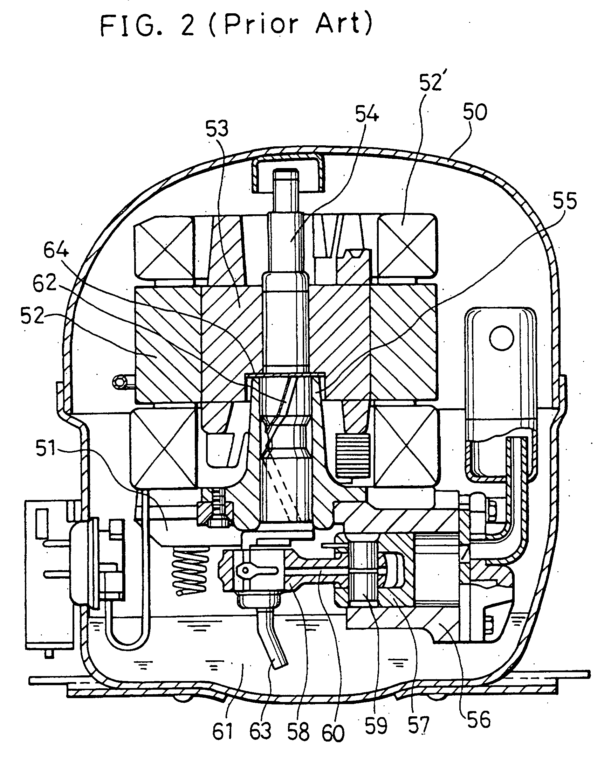

A conventional hermetic compressor has been disclosed in Japanese Laid-open Patent Application No. Sho 62-186075. The conventional hermetic compressor will be described below referring to FIG. 2.

FIG. 2 is a vertical sectional view showing the conventional hermetic compressor.

In FIG. 2, numeral 50 designates a hermetic shell, numeral 51 designates a compressing mechanism elastically supported by the hermetic shell 50, numeral 52 designates an electric motor disposed on the compressing mechanism 51, numeral 52' designates motorwindings, numeral 53 designates a rotor used as a part of the electric motor 52, numeral 54 designates a crankshaft secured to the rotor 53, numeral 62 designates a lubrication groove provided in the crankshaft 54, numeral 63 designates a lubrication pipe installed eccentrically on the crankshaft 54, numeral 55 designates a bearing for supporting the crankshaft 54, numeral 64 designates a washer disposed between the rotor 53 and the bearing 55, numeral 56 designates the cylinder bore portion of the compressing mechanism 51, numeral 57 designates a piston sliding in the cylinder bore portion, numeral 58 designates a connecting rod for transmitting the rotation of the crankshaft 54 to the piston 57, numeral 59 designates a piston pin for connecting the connecting rod 58 to the piston 57, numeral 60 designates a lubrication hole provided in the connecting rod 58, and numeral 61 designates refrigerating machine oil sealed at the bottom of the hermetic shell 50, respectively.

The action of the refrigerating machine oil in the hermetic compressor configured as described above will be described below. By the crankshaft 54 rotated by the electric motor 52, the refrigerating machine oil 61 sealed at the bottom of the hermetic shell 50 is sucked up by centrifugal force acting on the oil in the eccentrically arranged lubrication pipe 63 installed on the crankshaft 54. The oil is then supplied to the washer portion 64 through the lubrication groove 62 of the crankshaft 54, to the piston pin portion 59 through the lubrication hole 60 provided in the connecting rod 58 and to the sliding portions inside the cylinder, etc.

In the above-mentioned structure, a hydrocarbon-based refrigerant is lower in lubrication performance than the conventional refrigerant including chlorine, which have had a lubrication performance. Furthermore, in the case when the viscosity of the refrigerating machine oil is lowered to reduce input thereby to achieve a higher efficiency, when lubrication becomes intermittent particularly at the sliding portions, for instance the bearing portion, washer portion, piston pin portion and cylinder bore portion, unstable conditions and transient conditions in lubrication performance occur at the sliding portions. In addition, foam occurring in the oil owing to stirring by the lubrication pipe collides and resonates with thin-plate parts, e.g. the lubrication pipe and washer disposed in the lubrication path; and these foam result in a problem of causing noise.

The present invention is intended to solve the above-mentioned conventional problems. In accordance with the present invention, the viscosity of the refrigerating machine oil is lowered by adding additives into the refrigerating machine oil, by lowering the pour point of the refrigerating machine oil and by adding a foaming stabilizer into the refrigerating machine oil. Accordingly, the present invention is intended to obtain, even when a condition to form a lubricating oil-film is severe at the sliding portions, a hermetic compressor capable of maintaining such a desirable lubrication characteristics as having high efficiency and improved starting performance, causing lower operation noise, and having high reliability.

### DISCLOSURE OF THE INVENTION

In order to solve the above-mentioned problems, a hermetic compressor in accordance with the present invention is a hermetic compressor that uses a hydrocarbon refrigerant including neither fluorine nor chlorine, and a mineral lubrication oil having a kinematic viscosity of 25 cSt or less at 40°C, wherein preferably 5 to 10 weight % of MoSO₂ particles are added to the oil. Therefore, the MoS₂ particles having self-lubrication performance are diffused into the refrigerating machine oil, and the refrigerating machine oil is spread to the sliding portions. As a result, it is possible to reduce sliding loss, to improve starting performance, to reduce noise and to improve reliability.

A hermetic compressor in accordance with the present invention from another point of view uses a hydrocarbon refrigerant including neither fluorine nor chlorine, and a mineral lubrication oil having a kinematic viscosity of 25 cSt or less at 40°C, wherein 2.0 weight % or less extreme pressure agent is added to the oil thereby to set the Falex Tested Load value measured by a Falex tester for lubrication oil evaluation at 400 Lbf or more. Since the Falex Tested Load value is 400 Lbf or more, sufficient lubrication characteristics can be maintained even when the viscosity of the refrigerating machine oil is low and oil-film forming conditions are severe at the sliding portions, whereby reliability can be improved.

A hermetic compressor in accordance with the present invention from another point of view is a hermetic compressor that uses a hydrocarbon refrigerant including neither fluorine nor chlorine, and a mineral lubrication oil having a kinematic viscosity of 25 cSt or less at 40°C, wherein 1.0 weight % or less antioxidant is added to the oil thereby to set the Falex Tested Load value at 400 Lbf or more. Since the Falex Tested Load value is 400 Lbf or more, even when an oil-film forming conditions is severe at the sliding portions, sufficient lubrication characteristics can be maintained while preventing the oxidation of the refrigerating machine oil during compressor operation and lowering the viscosity thereof, thereby improving reliability.

A hermetic compressor in accordance with the present invention from another point of view uses a hydrocarbon refrigerant including neither fluorine nor chlorine, and a mineral lubrication oil having a kinematic viscosity of 25 cSt or less at 40°C, wherein the pour point of the oil is a -25°C or less. Therefore, the fluidity of the refrigerating machine oil can be maintained even in the low-temperature environment at the evaporator in a refrigeration cycle. As a result, the refrigerating machine oil circulates normally in the refrigeration cycle and returns to the compressor, whereby the proper amount'and the proper level of the oil of the compressor can be obtained, and the refrigeration function of the evaporator can be stabilized.

A hermetic compressor in accordance with the present invention from another point of view is a hermetic compressor that uses a hydrocarbon refrigerant including neither fluorine nor chlorine, and a mineral lubrication oil having a kinematic viscosity of 25 cSt or less at 40°C, wherein an ester-based foaming stabilizer is added to the oil. Therefore, foaming can be suppressed in the oil at stirring by the lubrication pipe, and collision of foam in the oil to thin-plate parts, such as the lubrication pipe and washer, disposed in the lubrication path and resultant resonation are prevented. As a result, it is possible to reduce noise in a high-frequency region of 3.15 to 10 kHz.

A hermetic compressor in accordance with the present invention from another point of view is a hermetic compressor that uses a hydrocarbon refrigerant including neither fluorine nor chlorine, and a mineral lubrication oil having a kinematic viscosity of 25 cSt or less at 40°C, wherein preferably 5 to 10 weight % of MoSO2 particles , 2.0 weight % or less extreme pressure agent, 1.0 weight % or less antioxidant and preferably 0.1 to 1.0 weight % ester-based foaming stabilizer are added to the mineral lubrication oil, and the pour point of the mineral oil is a -25°C or less.

With the hermetic compressor configured as described above, it is possible: to improve lubrication performance, to reduce sliding loss, to improve starting performance, to improve reliability and to reduce noise, to maintain lubrication performance even under a severe oil-film forming condition at sliding portions due to lowered viscosity of the refrigerating machine oil, to maintain stable performance for a long period of time without causing harmful effects by chemical changes and the like, by prevention of oxidation of the refrigerating machine oil, and to reduce noise in the high-frequency range by preventing collisions of foam in the oil and resultant resonating; and by the above-mentioned setting of the pour point of the refrigerating machine oil at -25°C or less, it is possible to secure the proper amount and the proper level of the oil in the compressor, and thereby the refrigeration function of the evaporator can be stabilized.

### BRIEF DESCRIPTION OF THE DRAWINGS

FIG. 1 is a vertical sectional view showing a hermetic compressor in accordance with embodiments 1 to 5 of the present invention.
FIG. 2 is a vertical sectional view showing a conventional hermetic compressor.

### BEST MODES FOR EMBODYING THE INVENTION

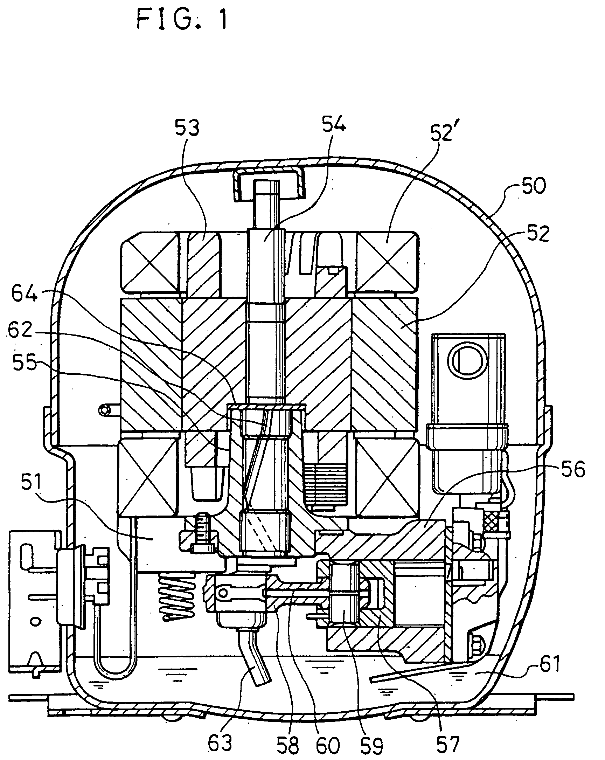

Embodiments in accordance with the present invention will be described below with reference to FIG. 1. The same portions as those of the conventional compressor of FIG. 2 are represented by the same numerals as of FIG. 2 for the prior art, and their descriptions are omitted.

### <Embodiment 1>

FIG. 1 is a vertical sectional view showing a hermetic compressor in accordance with an embodiment of the present invention described in claim 1. The refrigerating machine oil accommodated in the hermetic compressor preferably includes 5 to 10 weight % of MoS₂ very fine particles.

By the crankshaft 54 revolved by the electric motor 52 with motor windings 52', the refrigerating machine oil 61 preferably including 5 to 10 weight % of MoS₂ particles and sealed at the bottom of the hermetic shell 50 is sucked up through a known eccentrically bent lubrication pipe in accordance with centrifugal sucking force. This refrigerating machine oil 61 is supplied to the bearing 55 and the washer portion 64 through the lubrication groove 62 of the crankshaft 54, supplied to the piston pin portion 59 through the lubrication hole 60 provided in the connecting rod 58. The oil is also supplied to the sliding portions inside the cylinder and the like to lubricate and cool the various portions. At this time, the MoS₂ particles having self-lubrication performance are spread to the sliding portions together with the refrigerating machine oil 61. Therefore, it is possible to improve lubrication performance, to reduce sliding loss, to improve starting performance and to improve reliability. In addition, the MoS₂ particles function as a sound-absorbing material and can reduce operation noise.

As is clear from the above-mentioned embodiment, the hermetic compressor uses a hydrocarbon refrigerant including neither fluorine and nor chlorine, and a mineral lubrication oil having a kinematic viscosity of 25 cSt or less at 40°C, the MoS₂ particles having self-lubrication performance are diffused in the refrigerating machine oil, and the refrigerating machine oil is spread to the sliding portions. Therefore, sliding loss is reduced and starting performance is improved by the lubrication action of the MoS₂ particles. Thus, it is possible to obtain technical advantages of improved reliability and reduced noise.

### <Embodiment 2>

To the refrigerating machine oil 61 accommodated in the hermetic compressor of FIG. 1, 2.0 weight % or less of an extreme pressure agent is added. A suitable example of the extreme pressure agent is 2.0 weight % or less and more than zero % of tricresyl phosphate. Other points are the same as those of. Embodiment 1.

With the above-mentioned configuration, by the crankshaft 54 rotated by the electric motor 52, the refrigerating machine oil 61 including the extreme pressure agent and sealed at the bottom of the hermetic shell 50 is sucked up with a centrifugal sucking force through the known eccentrically bent lubrication pipe 63. And the refrigerating machine oil is supplied to the bearing portion 55 and the washer portion 64 through the lubrication groove 62 of the crankshaft 54, to the piston pin portion 59 through the lubrication hole 60 provided in the connecting rod 58, and to the sliding portions inside the cylinder and the like, to perform lubrication and refrigeration. At this time, the extreme pressure agent in the refrigerating machine oil lowers the viscosity of the refrigerating machine oil. Thereby, satisfactory lubrication characteristics can be maintained even when oil-film forming conditions is severe at the sliding portions, and reliability can be improved.

Furthermore, by selecting the addition amount of the extreme pressure agent at 2.0 weight % or less, even in an environment in a refrigeration cycle during compressor operation, the extreme pressure agent can function normally without harmful effects of low stability, which is resulted from corrosion and the like cause by chemical reaction between the extreme pressure agent and the refrigerating machine oil.

As is clear from the above-mentioned embodiment, in the hermetic compressor of the present embodiment that uses the hydrocarbon refrigerant including neither fluorine nor chlorine, and a mineral lubrication oil having a kinematic viscosity of 25 cSt or less at 40°C, as a result of adding 2.0 weight % or less of the extreme pressure agent to the refrigerating machine oil the Falex Tested Load value becomes 400 Lbf or more. Therefore, lubrication characteristics can be maintained, even when the viscosity of the refrigerating machine oil is lowered and oil-film forming conditions are severe at the sliding portions. Therefore, it is possible to obtain a technical advantage of improved reliability.

### <Embodiment 3>

To the refrigerating machine oil 61 accommodated in the hermetic compressor of FIG. 1, 1.0 weight % or less antioxidant is added. A suitable example of the antioxidant is dibutylparacresol. Other points are the same as those of Embodiment 1.

With the above-mentioned configuration, by revolution of the crankshaft 54 by the electric motor 52, the refrigerating machine oil 61 including the antioxidant and sealed at the bottom of the hermetic shell 50 is sucked up with a centrifugal force through the known eccentrically bent lubrication pipe 63. The refrigerating machine oil is supplied to the bearing portion 55 and the washer portion 64 through the lubrication groove of the crankshaft 54, to the piston pin portion 59 through the lubrication hole 60 provided in the connecting rod 58, and to the sliding portions inside the cylinder and the like to perform lubrication and refrigeration. At this time, the antioxidant in the refrigerating machine oil prevents the oxidation of the refrigerating machine oil even in an environment in a refrigeration cycle during compressor operation. And further, the antioxidant lowers the viscosity of the refrigerating machine oil, thereby maintaining the lubrication characteristics even when oil-film forming conditions are severe at the sliding portions. Thus it is possible to improve reliability.

Furthermore, by selecting the addition amount of the antioxidant at 1.0 weight % or less, the antioxidant functions normally without causing harmful effects by chemical changes even in the environment in the refrigeration cycle during compressor operation.

As is clear from the above-mentioned embodiment, in the hermetic compressor of the present embodiment that uses a hydrocarbon refrigerant including neither fluorine nor chlorine, and a mineral lubrication oil having a kinematic viscosity of 25 cSt or less at 40°C, by addition of 1.0 weight % or less antioxidant to the refrigerating machine oil the Falex load value becomes at 400 Lbf or more. Therefore, the viscosity of the refrigerating machine oil is lowered keeping prevention of the oxidation of refrigerating machine oil during compressor operation. As a result, even when oil-film forming conditions are severe at the sliding portions, satisfactory lubrication characteristics can be maintained, whereby it is possible to obtain an advantage of improved reliability.

### <Embodiment 4>

The pour point of the refrigerating machine oil 61 accommodated in the hermetic compressor of FIG. 1 is selected at -25°C or less. Other points are the same as those of Embodiment 1.

With the above-mentioned configuration, when the electric motor 52 revolves, a refrigerant gas is compressed by the compressor 51, is discharged from the compressor, led through the evaporator etc. and returns to the compressor in a vapor state. At the same time, the refrigerant gas is forcibly supplied into the cylinder 56. Or the refrigerating machine oil in a mist state circulates in a refrigeration cycle together with the refrigerant gas. At this time, the fluidity of the refrigerating machine oil can be maintained even in a low-temperature environment in the evaporator in the refrigeration cycle because the pour point of the refrigerating machine oil is -25°C or less as above-mentioned. As a result, the refrigerating machine oil circulates normally in the refrigeration cycle and returns to the compressor. Therefore, the proper amount and the proper level of the oil can be obtained in the compressor, and the refrigeration function of the evaporator can be stabilized.

As is clear from the above-mentioned embodiment, in the hermetic compressor using a hydrocarbon refrigerant including neither fluorine nor chlorine, and a mineral lubrication oil having a kinematic viscosity of 25 cSt or less at 40°C, by selecting the pour point of the refrigerating machine oil at -25°C, the refrigerating machine oil does not harden even when it becomes a low temperature at the evaporator and the like portion in the refrigeration cycle, thereby being capable of circulating normally in the refrigeration cycle. As a result, the refrigerating machine oil can return normally into the compressor. Therefore, the proper amount and the proper level of the oil can be obtained in the system, and a technical advantage as that of a stable refrigeration function of the evaporator is obtainable.

### <Embodiment 5>

In this embodiment, the refrigerating machine oil 61 accommodated in the hermetic compressor of FIG. 1 includes an added ester-based foaming stabilizer. A preferable example of the foaming stabilizer is sorbitan monolaurate, and a suitable adding amount is 0.1 to 1.0 weight %.

With the above-mentioned configuration, by revolution of the crankshaft 54 by the electric motor 52, the refrigerating machine oil 61 including the ester-based foaming stabilizer and sealed at the bottom of the hermetic shell 50 is sucked up by a centrifugal moving action through an eccentrically bent lubrication pipe 63. Therefore, the refrigerating machine oil 61 is supplied to the bearing portion 55 and the washer portion 64 through the lubrication groove 62 of the crankshaft 54, to the piston pin portion 59 through the lubrication hole 60 formed in the connecting rod 58, and to the sliding portions inside the cylinder and the like to perform lubrication and refrigeration. By the action of the ester-based foaming stabilizer in the refrigerating machine oil, foaming in oil by stirring by the lubrication pipe is prevented. Therefore, collision of foam in the oil with the thin-plate parts, such as the lubrication pipe and washer, and resultant resonation in the lubrication path are prevented. By this, it is possible to reduce noise in a high-frequency region of 3.15 to 10 kHz in particular.

As is clear from the above-mentioned embodiment, in the hermetic compressor using a hydrocarbon refrigerant neither including fluorine nor chlorine and a mineral lubrication oil having a kinematic viscosity of 25 cSt or less at 40°C, by adding an ester-based foaming stabilizer in the refrigerating machine oil, foaming in oil by stirring by the lubrication pipe is prevented. Thus, by preventing the collisions of foam in the oil with the thin-plate parts, e.g. the lubrication pipe and washer and hence preventing the resonation in the lubrication path, it is possible to obtain an advantage of reducing noise in a high-frequency region of 3.15 to 10 kHz in particular.

### <Sixth embodiment>

The refrigerating machine oil accommodated in the hermetic compressor of FIG. 1 includes, as additives, 5 to 10 weight % of MoS₂ particles, 2.0 weight % or less but more than zero % of an extreme pressure agent, preferably tricresyl phosphate, 1.0 weight % or less of an antioxidant, preferably dibutylparacresol, and 0.1 to 1.0 weight % of an ester-based foaming stabilizer, preferably sorbitan monolaurate, and the pour point of the refrigerating machine oil is -25°C or less.

With the hermetic compressor configured as described above, by the crankshaft 54 rotated by the electric motor 52, the above-mentioned refrigerating machine oil 61 sealed at the bottom of the hermetic shell 50 is sucked up through the lubrication pipe 63. The refrigerating machine oil 61 is than supplied to the bearing portion 55 and the washer portion 64 through the lubrication groove 62 of the crankshaft 54, to the piston pin portion 59 through the lubrication hole 60 in the connecting rod 58. The oil is also supplied to the sliding portions inside the cylinder and the like to lubricate and refrigerate the various portions. At this time, the MoS₂ particles having self-lubrication performance are spread to the sliding portions together with the refrigerating machine oil 61. Therefore, it is possible to improve lubrication performance, to reduce sliding loss, to improve starting performance and to improve reliability. And MoS₂ very fine particles also serve as a sound-absorbing material and can reduce noise. Since the above-mentioned extreme pressure agent in the refrigerating machine oil lowers the viscosity of the refrigerating machine oil, lubrication performance can be maintained even when oil-film forming conditions are severe at the sliding portions, thereby improving reliability.

The above-mentioned antioxidant in the refrigerating machine oil prevents the oxidation of the refrigerating machine oil even in an environment in a refrigeration cycle during compressor operation. Therefore, stable performance is maintained for an extended period of time. Since the addition amount of the antioxidant is 1.0 weight % or less, harmful results by chemical changes and the like are not made even in severe environment in the refrigeration cycle during compressor operation. Furthermore, by the action of the ester-based foaming stabilizer in the refrigerating machine oil, foaming in oil by stirring by the lubrication pipe is prevented. Therefore, foam in the oil do not collide with the thin-plate parts, such as the lubrication pipe and washer, and resonating in the lubrication path. Thus, it is possible to reduce noise in a high-frequency region of 3.15 to 10 kHz in particular. Since the pour point of the refrigerating machine oil is set at -25°C or less as described above, the fluidity of the refrigerating machine oil is maintained even in the low-temperature environment at the evaporator in the refrigeration cycle. As a result, the refrigerating machine oil circulates normally in the refrigeration cycle and returns to the compressor. Therefore, the proper amount and the proper level of the oil can be obtained in the compressor, and the refrigeration function of the evaporator can be stabilized.

The present invention offers technical advantages of improved starting performance, reduced noise and vibration, improved lubrication performance for a longer period of time, stabilized refrigerating function, and so on for hermetic compressors for use with electric refrigerators, air conditioners; and therefore high industrial applicability is obtainable.

## Claims

1. A hermetic compressor using a hydrocarbon refrigerant including neither fluorine nor chlorine, and a mineral lubrication oil having a kinematic viscosity of 25 cSt or less at 40°C, said mineral lubrication oil are added with preferably 5 to 10 weight % of MoSO2 particles.

2. A hermetic compressor using a hydrocarbon refrigerant not including fluorine and chlorine, and mineral lubrication oil having a kinematic viscosity of 25 cSt or less at 40°C, said mineral lubrication oil is added with 2.0 weight % or less and more than zero % of an extreme pressure agent, to set the Falex Tested Load value thereof at 400 Lbf or more.

3. A hermetic compressor using a hydrocarbon refrigerant not including fluorine and chlorine, and mineral lubrication oil having a kinematic viscosity of 25 cSt or less at 40°C, said mineral lubrication oil is added with 1.0 weight % or less and more than zero % of an antioxidant, to set the Falex Tested Load value thereof at 400 Lbf or more.

4. A hermetic compressor using a hydrocarbon refrigerant not including fluorine and chlorine, and mineral lubrication oil having a kinematic viscosity of 25 cSt or less at 40°C, the pour point of said mineral lubrication oil being -25°C or less.

5. A hermetic compressor using a hydrocarbon refrigerant not including fluorine and chlorine, and mineral lubrication oil having a kinematic viscosity of 25 cSt or less at 40°C, said mineral lubrication oil is added with an ester-based foaming stabilizer.

6. A hermetic compressor using a hydrocarbon refrigerant not including fluorine and chlorine, and mineral lubrication oil having a kinematic viscosity of 25 cSt or less at 40°C, said mineral lubrication oil is added with preferably 5 to 10 weight % of MoSO₂ particles, 2.0 weight % or less and more than zero % of an extreme pressure agent, 1.0 weight % or less and more than zero % of an antioxidant and 0.1 to 1.0 weight % of an ester-based foaming stabilizer, the pour point of said mineral oil being -25°C or less.

7. A refrigerator provided with a hermetic compressor in accordance with one of claims 1 to 6.

8. A freezer provided with a hermetic compressor in accordance with one of claims 1 to 6.
